**Europäisches Patentamt**

**European Patent Office**

**Office européen des brevets**

(19)

(11) Numéro de publication: **0 224 413**
**B1**

(12) # FASCICULE DE BREVET EUROPEEN

(45) Date de publication du fascicule du brevet:
09.08.89

(51) Int. Cl.⁴: **G21C 19/34, G21C 21/08**

(21) Numéro de dépôt: 86402455.9

(22) Date de dépôt: 03.11.86

(54) **Procédé de recyclage de pastilles de combustible nucléaire précédemment irradiées dans un réacteur nucléaire à neutrons rapides.**

(30) Priorité: 08.11.85 FR 8516577

(43) Date de publication de la demande:
03.06.87 Bulletin 87/23

(45) Mention de la délivrance du brevet:
09.08.89 Bulletin 89/32

(84) Etats contractants désignés:
**DE GB IT**

(56) Documents cités:
**DE-A- 1 589 850**
**FR-A- 1 304 439**
**FR-A- 2 080 952**
**GB-A- 1 097 597**

(73) Titulaire: **NOVATOME, Tour Fiat 1, place de la Coupole,**
**F-92400 - Courbevoie(FR)**

(72) Inventeur: Marcon, Jean-Pierre, 45, Avenue Foch,
**F-69006 Lyon(FR)**

(74) Mandataire: **Mongrédien, André et al, c/o**
**BREVATOME 25, rue de Ponthieu, F-75008 Paris(FR)**

ACTORUM AG

**Description**

L'invention concerne un procédé de recyclage de pastilles de combustibles nucléaire contenues dans une première gaine métallique, à l'intérieur de laquelle ces pastilles ont été précédemment irradiées dans un réacteur nucléaire à neutrons rapides.

Dans les réacteurs nucléaires à neutrons rapides, la matière fissile se présente sous la forme de pastilles constituées le plus souvent par un oxyde mixte d'uranium et de plutonium ($UO_2$, $PuO_2$). Ces pastilles sont empilées à l'intérieur de gaines métalliques, pour former des aiguilles de combustible nucléaire. Ces aiguilles sont elles-mêmes disposées en faisceaux dans des fourreaux de section hexagonale, pour former des assemblages de combustible nucléaire.

Lorsqu'un assemblage neuf est placé dans le coeur d'un réacteur nucléaire à neutrons rapides, il existe un certain jeu radial entre les pastilles de combustible nucléaire et les gaines contenant ces pastilles. Ce jeu initial est prévu d'une part afin de tenir compte du gonflement des pastilles qui se produit sous irradiation et d'autre part afin d'effectuer une introduction satisfaisante des pastilles d'oxyde dans la gaine au cours de la fabrication.

Par ailleurs, la durée d'irradiation des assemblages dans le coeur d'un réacteur nucléaire à neutrons rapides est limitée par les déformations subies par l'aiguille combustible et le tube hexagonal, ces déformations étant provoquées essentiellement par le gonflement de l'acier.

Dans l'état actuel de la technique, les assemblages de combustible nucléaire sont ensuite démantelés, les aiguilles sont tronçonnées et le combustible est retraité. Ces différentes opérations sont évidemment très longues et très coûteuses en particulier la dernière, et pénalisent fortement le coût du cycle de combustible des réacteurs nucléaires à neutrons rapides. Un procédé d'extraction des pastilles de la gaine est proposé dans FR-A 2 080 952.

La presente invention repose sur l'observation selon laquelle, lorsque les assemblages irradiés sont évacués par suite du gonflement des gaines, le taux de combustion des pastilles de combustible est faible par rapport aux possibilités de combustion offertes intrinsèquement par ce combustible.

Dans le cas particulier d'un réacteur nucléaire à neutrons rapides comprenant un coeur à chute de réactivité nulle, tel que proposé dans les demandes de brevets FR-A 2 568 713 et EP-A 190 072, le retraitement serait considérablement espacé si la durée d'irradiation des assemblages n'était pas limitée par le gonflement des gaines.

Il apparaît donc que la limitation de la durée d'irradiation des assemblages imposée par le gonflement des gaines conduit à une exploitation médiocre des possibilités offertes par le combustible lui-même. En particulier, le retraitement du combustible après une période d'irradiation unique et de durée limitée n'est pas justifié et accroît considérablement le coût de la filière.

La présente invention a précisément pour objet un procédé permettant de recycler les pastilles de combustible nucléaire après que celles-ci aient subi une ou plusieurs irradiations. Le retraitement du combustible peut ainsi être supprimé ou limité au combustible ayant atteint des taux de combustion très élevés, de l'ordre de trois fois ceux qui sont atteints actuellement après une irradiation unique. Le coût d'exploitation de la filière s'en trouve ainsi sensiblement diminué.

A cet effet, il est proposé un procédé de recyclage de pastilles de combustible nucléaire contenues dans une première gaine métallique à l'intérieur de laquelle ces pastilles ont été précédemment irradiées dans un réacteur nucléaire à neutrons rapides, ce procédé étant caractérisé en ce qu'il consiste à extraire les pastilles de la première gaine et à introduire ces pastilles dans une gaine métallique neuve présentant un diamètre intérieur légèrement supérieur au diamètre intérieur de la première gaine.

Dans un mode de réalisation préféré de l'invention, on extrait les pastilles de la première gaine en faisant fondre celle-ci progressivement à partir d'une de ses extrémités, les pastilles ainsi mises à nu étant introduites immédiatement dans la gaine neuve.

De préférence, on fait alors fondre la première gaine au moyen d'une bobine alimentée par un courant électrique à fréquence élevée produisant par induction un effet thermique de peau.

Afin d'éviter que la gaine fondue ne vienne se recoller sur la partie restante de la gaine, on évacue la partie fondue de la gaine soit au moyen d'un déflecteur en matériau réfractaire, sur lequel la première gaine n'adhère pas après fusion, soit en soufflant un gaz neutre sur la partie fondue de la gaine.

Selon un autre aspect de l'invention, l'introduction des pastilles dans la gaine neuve est facilitée par un préchauffage de cette gaine.

En outre, pour limiter la contamination de la gaine neuve, il est préférable de placer celle-ci à l'intérieur d'un fourreau.

On décrira maintenant, à titre d'exemple non limitatif, un mode de réalisation préféré de l'invention en se référant aux dessins annexés dans lesquels :

- la figure 1 est une vue en coupe longitudinale schématique d'une installation pour la mise en oeuvre du procédé conforme à l'invention, cette installation étant représentée en fonctionnement, et
- les figures 2a, 2b et 2c sont des vues à plus grande échelle représentant respectivement, en coupe partielle, une partie d'une aiguille neuve et de son fil d'espacement, une partie de la même aiguille et du même fil après irradiation, et une nouvelle aiguille constituée par les pastilles précédemment irradiées et par une gaine neuve, ainsi que le fil d'espacement de cette nouvelle aiguille.

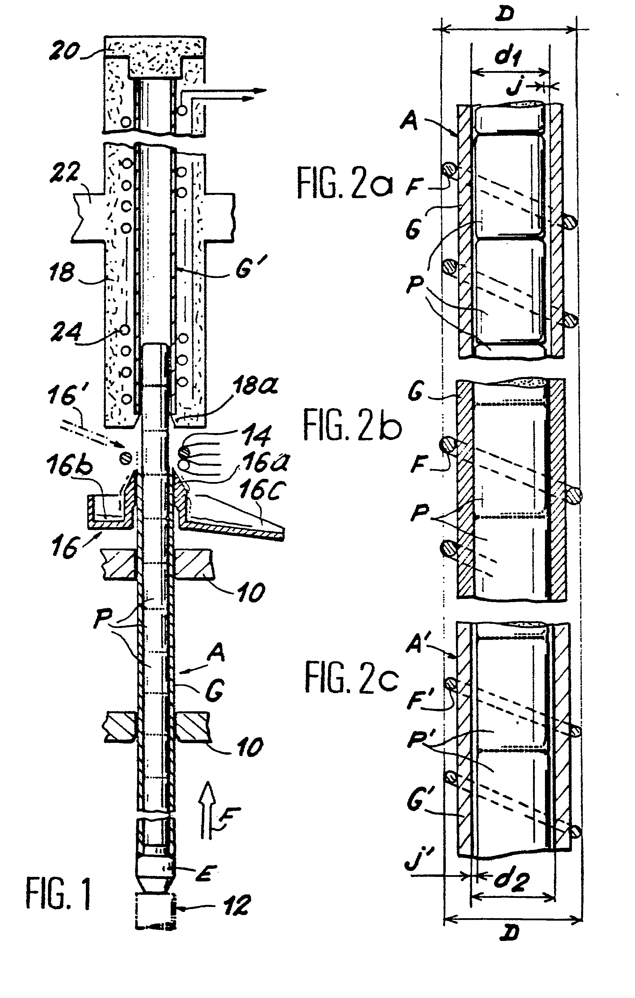

L'installation représentée très schématiquement sur la figure 1 comprend tout d'abord des guides permettant de maintenir et de guider en position verticale une aiguille A préalablement irradiée dans le coeur d'un réacteur nucléaire à neutrons rapides.

Cette aiguille A se compose de façon connue d'une gaine métallique G (par exemple en acier inoxydable), de forme tubulaire, dans laquelle se trouve logé un empilement de pastilles P constituant le com-

bustible nucléaire. Ces pastilles P sont généralement formées d'un oxyde mixte d'uranium et de plutonium ($UO_2$, $PuO_2$). Cependant, on comprendra aisément que le procédé selon l'invention peut être utilisé quelle que soit la constitution des pastilles contenues dans la gaine et notamment lorsque l'oxyde mixte est remplacé par un carbure ou par un nitrure.

Lorsqu'elle était située dans un assemblage de combustible nucléaire, l'aiguille A comprenait en outre des embouts supérieur et inférieur fermant la gaine G à ses extrémités. L'embout supérieur est retiré par tronçonnage de l'extrémité de la gaine avant que l'aiguille ne soit introduite dans l'installation de la figure 1, ce qui explique qu'il n'apparait pas sur cette figure.

Par suite de l'irradiation de l'aiguille A dans le coeur d'un réacteur à neutrons rapides, le jeu radial j qui existait initialement entre les pastilles P et la gaine G (figure 2a) a disparu sous l'effet du gonflement des pastilles (figure 2b). Les pastilles sont donc en quelque sorte serties dans la gaine G.

L'installation représentée sur la figure 1 comprend de plus un dispositif élévateur d'aiguilles comportant un poussoir 12 venant en appui sur l'extrémité inférieure de l'aiguille A. Ce poussoir est actionné progressivement par exemple au moyen d'un vérin (non représenté), de façon à faire monter progressivement l'aiguille A selon son axe vertical entre les guides 10 (flèche F sur la figure 1). Le poussoir 12 peut éventuellement être remplacé par une pince ou par un dispositif analogue.

Un dispositif de chauffage fixe est situé au-dessus du guide 10 le plus élevé. Au début d'un cycle, l'extrémité supérieure de l'aiguille A, dont on désire changer la gaine est amenée au niveau de ce dispositif de chauffage. Ce dispositif entoure la gaine G et permet d'en élever localement la température jusqu'à son point de fusion, sans dégrader les pastilles P.

Dans le mode de réalisation représenté, le dispositif de chauffage est constitué par une bobine 14 de chauffage par induction. Cette bobine comprend au moins une spire et son axe vertical est confondu avec l'axe du poussoir 12 et des guides 10.

La bobine 14 est alimentée par un courant électrique alternatif à fréquence élevée. Par effet de peau, on induit ainsi des courants électriques dans la gaine métallique G, bonne conductrice de l'électricité. On réalise ainsi un chauffage local par induction de la gaine G, ce qui a pour effet de faire fondre cette gaine progressivement au fur et à mesure de l'élévation de l'aiguille A assurée par le poussoir 12.

Le matériau fissile constituant les pastilles P est mauvais conducteur de l'électricité. Ces pastilles ne sont donc pratiquement pas chauffées par la bobine 14.

De préférence, afin d'éviter que le métal fondu de la gaine ne vienne se recoller sur la partie inférieure non fondue de cette dernière, l'installation comprend des moyens pour évacuer ce métal au fur et à mesure de sa fusion.

Dans le mode de réalisation représenté en traits pleins sur la figure 1, ces moyens sont constitués par un déflecteur annulaire fixe 16, en matériau réfractaire, disposé autour de l'aiguille A et coaxialement à celle-ci, immédiatement en-dessous de la bobine 14. La partie supérieure 16a du déflecteur 16 se comporte comme un racleur entourant étroitement la gaine G non encore fondue. A cet effet, l'extrémité supérieure de cette partie 16a du racleur est effilée, de façon à permettre l'écoulement du métal fondu vers une goulotte annulaire 16b constituant la partie inférieure du déflecteur 16. Comme l'illustre la figure 1, cette goulotte 16b se prolonge par une rampe d'évacuation 16c du métal fondu.

Dans une variante de réalisation représentée en traits mixtes sur la figure 1, le déflecteur 16 est remplacé par une ou plusieurs buses 16' par laquelle on souffle un gaz neutre tel que de l'argon sur la gaine G, à proximité immédiate de la bobine 14. Cette solution permet également d'évacuer le métal fondu et d'éviter son recollement sur la gaine non fondue. Toutefois, elle a pour inconvénient des risques de dispersion du métal fondu dans la cellule à l'intérieur de laquelle est située l'installation.

Dans sa partie supérieure, l'installation représentée sur la figure 1 comprend des moyens permettant de supporter de façon fixe une gaine neuve G', de façon à ce que celle-ci soit disposée coaxialement à l'aiguille A et que son extrémité inférieure soit aussi proche que possible de la bobine de chauffage 14.

Dans le mode de réalisation représenté, ces moyens de supportage comprennent un manchon 18 dans lequel la gaine G' est enfilée jusqu'à une butée inférieure 18a. Tout déplacement de la gaine G' vers le haut est ensuite empêché par la mise en place d'un bouchon 20 au-dessus du manchon 18. Ce dernier étant monté dans un support fixe 22, le positionnement de la gaine neuve G' par rapport à la partie inférieure de l'installation est assuré.

En plus de sa fonction de supportage, le manchon 18 permet de protéger au moins partiellement la gaine neuve G' contre la contamination en provenance de l'aiguille irradiée A.

Comme l'illustre la figure 1, le manchon 18 sert également à assurer un préchauffage de la gaine neuve G', par exemple une température d'environ 600 C. A cet effet, un dispositif de préchauffage comprenant par exemple une résistance électrique 24 enroulée en hélice autour de la gaine G' est noyée dans le manchon 18 sur toute la hauteur de la gaine. Ce dispositif de préchauffage facilite l'introduction des pastilles P de l'aiguille irradiée A dans la gaine neuve G', en assurant une dilatation de cette gaine, et par conséquent, un accroissement de son diamètre intérieur.

Conformément à une caractéristique essentielle de l'invention, le diamètre intérieur $d_2$ de la gaine neuve G' non dilatée (figure 2c) est toutefois légèrement supérieur au diamètre intérieur $d_1$ de la précédente gaine G de l'aiguille A (figure 2c). En effet, l'invention ayant pour but de permettre une nouvelle irradiation des pastilles P dans le coeur d'un réacteur nucléaire à neutrons rapides, il est nécessaire de prévoir un certain jeu radial j' (figure 2c) entre les pastilles P qui ont déjà subies au moins une irradiation préalable et l'intérieur de la gaine neuve G'.

En raison de ce jeu j', on comprend que le préchauffage de la gaine neuve G' n'est pas indispensable à l'invention et a seulement pour objet de faciliter l'introduction des pastilles dans la gaine.

Grâce à l'installation qui vient d'être décrite, l'élévation progressive de l'aiguille A assurée par le poussoir 12 a pour effet d'introduire progressivement l'empilement de pastilles P à l'intérieur de la gaine neuve G', pratiquement immédiatement après que la partie de la gaine irradiée G entourant ces pastilles ait été fondue à l'aide de la bobine 14. De cette manière, on réalise un changement de gaine de l'aiguille pratiquement sans que les pastilles P de combustible nucléaire n'aient à subir de contrainte mécanique. Ce dernier aspect est particulièrement important, dans la mesure où ces pastilles sont relativement fragiles.

De préférence, l'embout inférieur inactif E de l'aiguille A reste en place, ce qui permet d'éviter une détérioration du piston 12 par la bobine de chauffage 14.

Lorsque le changement de gaine est terminé, l'ensemble constitué par la gaine neuve G' contenant l'empilement de pastilles P est transféré sur un autre poste où des embouts supérieur et inférieur neufs sont mis en place pour terminer l'aiguille.

Il est à noter que ce procédé peut être mis en oeuvre plusieurs fois de suite sur les mêmes pastilles de combustible nucléaire. A chaque fois, le gonflement des pastilles sous irradiation est compensé par la mise en place de celles-ci dans une gaine dont le diamètre intérieur est légèrement accru. De cette manière, il est possible de supprimer le retraitement du combustible nucléaire ou de n'effectuer ce retraitement que pour des combustibles ayant atteint des taux de combustion très élevés, de l'ordre de trois fois ceux atteint actuellement après une irradiation unique.

A chaque recyclage des pastilles de combustible nucléaire, on économise le coût du retraitement et du transport nécessaire à ce retraitement, le coût de l'installation permettant ce recyclage étant très faible par rapport à celui du retraitement.

De plus, l'investissement nécessaire à un stockage définitif du combustible ou à son retraitement peut être différé d'environ dix ans par rapport au démarrage d'un réacteur nucléaire à neutrons rapides.

Sur les figures 2a, 2b et 2c, on a également représenté les fils d'espacement F et F' qui entourent respectivement l'aiguille A comportant la première gaine G et l'aiguille A' comportant la nouvelle gaine G', à l'intérieur des assemblages dans lesquels ces aiguilles sont placées.

Afin que l'encombrement des aiguilles A et A', défini par le diamètre D du cylindre, enveloppe des fils d'espacement F et F' reste inchangé malgré la différence de diamètre entre les gaines G et G' (de diamètres intérieurs $d_1$ et $d_2$), on voit sur les figures 2a et 2c que les diamètres des fils d'espacement F et F' sont différents. De façon plus précise, le diamètre du fil d'espacement F' est légèrement inférieur à celui du fil d'espacement F.

Bien entendu, l'invention n'est pas limitée au mode de réalisation qui vient d'être décrit à titre d'exemple mais en couvre toutes les variantes. En particulier, si l'élimination de la gaine de l'aiguille irradiée est effectuée de préférence par fusion de celle-ci, d'autres techniques de destruction douce de la gaine peuvent également être envisagées.

On peut notamment inciser la gaine de l'aiguille irradiée selon au moins deux génératrices de celle-ci afin de la séparer de l'empilement de pastilles sans appliquer sur celui-ci de contrainte mécanique trop importante. Dans le cas de l'élimination de la gaine par chauffage, tout moyen de chauffage connu peut également être utilisé à la place du dispositif de chauffage par induction décrit. Ce dernier est toutefois particulièrement avantageux, car il n'induit pratiquement aucun chauffage des pastilles de combustible nucléaire.

Par ailleurs, la cinématique de l'installation décrite peut être inversée, l'aiguille A restant fixe alors que le dispositif de chauffage ainsi que la partie portant la gaine neuve se déplacent progressivement selon l'axe de l'aiguille.

De même, tout type de combustible, oxyde, carbure, nitrure,... peut être soumis à ce type de recyclage, ainsi qu'un matériau métallique quelconque de gaine.

**Revendications**

1. Procédé de recyclage de pastilles (P) de combustible nucléaire contenues dans une première gaine métallique (G) à l'intérieur de laquelle ces pastilles (P) ont été précédemment irradiées dans un réacteur nucléaire à neutrons rapides, ce procédé étant caractérisé en ce qu'il consiste à extraire les pastilles (P) de la première gaine (G) et à introduire ces pastilles dans une gaine métallique neuve (G') présentant un diamètre intérieur ($d_2$) légèrement supérieur au diamètre intérieur ($d_1$) de la première gaine (G).

2. Procédé selon la revendication 1, caractérisé en ce qu'on extrait les pastilles (P) de la première gaine (G) en faisant fondre celle-ci progressivement à partir d'une de ses extrémités, les pastilles (P) ainsi mises à nu étant introduites immédiatement dans la gaine neuve (G').

3. Procédé selon la revendication 2, caractérisé en ce qu'on fait fondre la première gaine (G) au moyen d'une bobine (14) alimentée par un courant électrique à fréquence élevée produisant par induction un effet de peau.

4. Procédé selon l'une quelconque des revendications 2 et 3, caractérisé en ce qu'on évacue la première gaine (G) immédiatement après fusion.

5. Procédé selon la revendication 4, caractérisé en ce qu'on évacue la première gaine (G) au moyen d'un déflecteur (16) en matériau réfractaire et sur lequel la première gaine (G) n'adhère pas après fusion.

6. Procédé selon la revendication 4, caractérisé en ce qu'on évacue la première gaine (G) par soufflage d'un gaz neutre.

7. Procédé selon l'une quelconque des revendications 1 à 6, caractérisé en ce qu'on introduit les pastilles (P) dans la gaine neuve (G') après préchauffage de cette dernière.

8. Procédé selon l'une quelconque des revendications précédentes, caractérisé en ce qu'on place la gaine neuve (G') dans un fourreau (18) limitant sa contamination.

**Patentansprüche**

1. Verfahren zum Rückführen von Kernbrennstofftabletten (P), die in einer ersten metallischen Hülle (G) angeordnet sind, in der die Tabletten (P) zuvor in einem Kernreaktor mit schnellen Neutronen bestrahlt worden sind, dadurch gekennzeichnet, daß man die Tabletten (P) aus der ersten Hülle (G) entnimmt und sie in eine neue metallische Hülle (G') einführt, die einen Innendurchmesser (d₂) aufweist, der leicht größer als der Innendurchmesser (d₁) der ersten Hülle (G) ist.

2. Verfahren nach Anspruch 1, dadurch gekennzeichnet, daß man die Tabletten (P) aus der ersten Hülle (G) entnimmt, indem man die Hülle progressiv von einem ihrer Enden schmelzen läßt, wobei die so freigelegten Tabletten (P) unmittelbar in die neue Hülle (G') eingeführt werden.

3. Verfahren nach Anspruch 2, dadurch gekennzeichnet, daß man die erste Hülle (G) mittels einer Spule (14) zum Schmelzen bringt, die von einem elektrischen Hochfrequenzstrom durchflossen ist, der durch Induktion einen Skineffekt hervorruft.

4. Verfahren nach einem der Ansprüche 2 und 3, dadurch gekennzeichnet, daß man die erste Hülle (G) unmittelbar nach dem Schmelzen entnimmt.

5. Verfahren nach Anspruch 4, dadurch gekennzeichnet, daß man die erste Hülle (G) mittels eines Abweisers (16) aus feuerfestem Material und auf dem die erste Hülle (G) nach dem Schmelzen nicht anklebt, abführt.

6. Verfahren nach Anspruch 4, dadurch gekennzeichnet, daß man die erste Hülle (G) durch Wegblasen mit einem neutralen Gas abführt.

7. Verfahren nach einem der Ansprüche 1 bis 6, dadurch gekennzeichnet, daß man die Tabletten (P) in die neue Hülle (G') nach Vorerwärmung letzterer einführt.

8. Verfahren nach einem der vorhergehenden Ansprüche, dadurch gekennzeichnet, daß man die neue Hülle (G') in eine Manschette (18) einsetzt, die ihre Verunreinigung in Grenzen hält.

**Claims**

1. Process for the recycling of nuclear fuel pellets (P) contained in a first metal can (G) in which these pellets (P) have previously been irradiated in a fast neutron nuclear reactor, characterized in that the process comprises extracting the pellets (P) from the first can (G) and introducing them into a new metal can (G') having a slightly larger internal diameter (d₂) than that (d₁) of the first can (G).

2. Process according to claim 1, characterized in that the pellets (P) are extracted from the first can (G) by progressively melting the latter from one of its ends, the thus exposed pellets (P) being immediately introduced into the new can (G').

3. Process according to claim 2, characterized in that the first can (G) is melted by means of a coil (14) supplied by a high frequency electric current producing a skin effect by induction.

4. Process according to either of the claims 2 and 3, characterized in that the first can (G) is removed immediately after it has melted.

5. Process according to claim 4, characterized in that the first can (G) is removed by means of a refractory material deflector (16) and to which the first can (G) does not adhere after melting.

6. Process according to claim 4, characterized in that the first can (G) is removed by blowing with a neutral gas.

7. Process according to any one of the claims 1 to 6, characterized in that the pellets (P) are introduced into the new can (G') after preheating the latter.

8. Process according to any one of the preceding claims, characterized in that the new can (G') is placed in a sleeve (18) limiting the contamination thereof.

FIG. 1

FIG. 2a

FIG. 2b

FIG. 2c